# EUROPÄISCHE PATENTSCHRIFT

(11) **EP 2 270 376 B1**
(45) Veröffentlichungstag und Bekanntmachung des Hinweises auf die Patenterteilung: **07.09.2011**
(21) Anmeldenummer: 09008538.2
(22) Anmeldetag: 30.06.2009
(51) Int. Cl.: F16L 5/08

(54) **Durchführung für dünne Wände, insbesondere Gerätegehäuse**
Conduit for thin walls, especially device casings
Traversée pour murs fins, notamment boîtier d'appareil

(43) Veröffentlichungstag der Anmeldung: 05.01.2011
(73) Patentinhaber: Hauff-Technik GmbH & Co. KG, 89542 Herbrechtingen (DE)
(72) Erfinder: Seibold, Michael, 89134 Blaustein (DE); Kurz, Ralf, 89537 Giengen (DE); Lange, Wolfgang, 89428 Syrgenstein (DE)
(74) Vertreter: Szynka, Dirk

(56) Entgegenhaltungen:
- EP-A1- 1 519 092
- EP-A1- 1 843 071
- DE-C1- 3 828 693
- FR-A1- 2 590 347

## Beschreibung

Die vorliegende Erfindung betrifft eine Leitungsdurchführung zum abgedichteten Durchführen einer Leitung durch eine Wand mit einem Elastomerkörper und einer Spannplatte zum Spannen des Elastomerkörpers mittels Spannbolzen.

Aus dem Stand der Technik sind Leitungsdurchführungen für Wände bekannt, bei denen ein Elastomerkörper zwischen zwei Spannplatten entlang der Leitungsrichtung komprimiert wird und dadurch auch in Richtung quer zur Leitung gegen die Leitung verpresst wird. Bei der Montage einer derartigen Leitungsdurchführung wird zunächst der Elastomerkörper in die Wandöffnung gesetzt, und im Anschluss werden die Spannplatten von beiden Seiten an den Elastomerkörper angelegt und die Spannbolzen eingesetzt. Die Spannplatten sowie der Elastomerkörper weisen dabei eine dem Leitungsdurchmesser entsprechende Durchgangsöffnung auf, sodass die Leitung durchgeführt und der Elastomerkörper dann gegen die Leitung verpresst werden kann.

Die EP 1 519 092 A1 zeigt eine Leitungsdurchführung mit einem die Leitung umfassenden elastischen Dichtungsring und einem Pressring, der den von einer Spannhülse umfassten Dichtungsring auf die Leitung und mit einer Stirnseite zur Wandfläche hin komprimiert. Zu diesem Zweck wird der Pressring mit den Dichtungsring durchsetzenden Gewindestangen zur Wand hin verspannt, wobei die Gewindestangen durch gesonderte Bohrungen in dem den Wanddurchbruch umgebenden Wandbereich verlaufen. Der Dichtungsring dichtet dann zu der den Wanddurchbruch umgebenden Wandfläche hin.

Der Erfindung liegt die Aufgabe zugrunde, eine möglichst vorteilhafte Ausgestaltung einer Leitungsdurchführung mit Spannhülse anzugeben.

Erfindungsgemäß wird diese Aufgabe gelöst, indem für die Leitungsdurchführung neben einem Elastomerkörper zum Abdichten, einer Spannplatte zum Spannen des Elastomerkörpers und Spannbolzen zum Durchsetzen des Elastomerkörpers und der Wand und Spannen des Elastomerkörpers zusammenwirkend mit der Spannplatte zusätzlich eine Spannhülse zum Spannen des Elastomerkörpers zusammenwirkend mit der Spannplatte vorgesehen ist. Dabei ist die Spannhülse dazu ausgelegt, einen über die Wandöffnung hinausstehenden Teil des Elastomerkörpers in Bezug auf Richtungen quer zur Leitungsrichtung zu umfassen und durch eine Begrenzung der Ausdehnung des Elastomerkörpers in Richtungen quer zur Leitungsrichtung dessen Kompression zu bewirken. Der Elastomerkörper ist dazu ausgelegt, die Leitung in Bezug auf Richtungen quer zur Leitungsrichtung abzudichten und die Wand durch eine Anlage des Elastomerkörpers an der Laibung der Öffnung durch die Wand abzudichten.

Diese Ausgestaltung ist besonders vorteilhaft, da die Spannhülse die Ausdehnung des Elastomerkörpers in Richtungen quer zur Leitungsrichtung begrenzt und somit dessen Kompression bewirkt, wodurch die Dichtwirkung zu der Leitung ebenso erhöht wird wie jene zu der Laibung der Wandöffnung bzw. der Wandfläche. Hierbei wie auch im Folgenden ist die Kompression des Elastomerkörpers nicht auf dessen Volumen, sondern auf jeweils ausgezeichnete Richtungen bezogen.

Bevorzugte Ausgestaltungen der Erfindung sind in den abhängigen Ansprüchen angegeben. Im Folgenden wird nicht mehr im Einzelnen zwischen der Beschreibung der Leitungsdurchführung und dem Verwendungsaspekt der Erfindung unterschieden, die Offenbarung ist implizit im Hinblick auf beiden Kategorien zu verstehen.

Eine Ausgestaltung der Erfindung sieht vor, dass die Spannhülse nur durch den Elastomerkörper fest mit der Wand verbunden ist. Beim Spannen des Elastomerkörpers wird dieser einerseits gegen die Wand oder Laibung der Wandöffnung verpresst, und andererseits begrenzt die Spannhülse die Ausdehnung in Richtungen quer zur Leitungsrichtung, bewirkt also auch eine Kompression des Elastomerkörpers. Durch diese Wechselwirkung kann die Spannhülse zumindest über hohe Haftreibung, ggf. jedoch auch über einen geometrischen Formschluss, fest mit dem Elastomerkörper und damit auch mit der Wand verbunden sein, wenn der Elastomerkörper gegen die Laibung der Wandöffnung bzw. die Wandfläche verspannt ist. Dabei kann die Spannhülse zwar beispielweise zum Zwecke der Montage der Leitungsdurchführung vorübergehend an der Wand fixiert werden; entscheidend ist jedoch, dass im montierten Zustand die kräftetragende Verbindung zwischen Spannhülse und Wand durch den Elastomerkörper vermittelt wird. Somit wird vorzugsweise darauf verzichtet, die Spannhülse vor der eigentlichen Montage des Dichtelements in der Wandöffnung zu installieren, etwa durch Verschrauben, Klemmen, Klipsen oder Spreizen oder auch durch eine Verbindung mittels Verputzen, Vergießen oder Verspritzen von Material. An der Außenfläche des Elastomerkörpers kann ferner eine in Richtungen quer zur Leiterbahn umlaufende Ausnehmung vorgesehen sein, welche der Aufnahme der Spannhülse dient und diese auch dann in Position hält, wenn der Elastomerkörper nicht verspannt ist.

Eine weitere Ausführungsform der Leitungsdurchführung sieht eine Spannhülse vor, die keine Befestigungsvorrichtung aufweist, insbesondere eine einfache glatte hohlzylindrische oder anderweitig einfache hohle Rohrform hat. (Grundsätzlich sind bei dieser Erfindung im Schnitt runde, d.h. zylindrische, Formen bevorzugt, gleichermaßen aber auch rechteckige oder andere Schnittgeometrien möglich.) Bei dieser Ausgestaltung sind an der Spannhülse also insbesondere keine Durchgangslöcher für Bolzen oder Schrauben vorgesehen und ferner weist die Spannhülse auch kein Außengewinde zu deren Verschrauben in der Wandöffnung auf. Die Spannhülse ist ferner auch nicht mit einem anderen als dem die Leitung dichtenden Elastomerkörper gegen die Wand verspreizt oder in der Wandöffnung verklemmt; zu diesem Zweck sind auch weder Klammern oder sonstige Halterungen vorgesehen.

In weiterer Ausgestaltung der Leitungsdurchführung ist vorgesehen, dass die Spannhülse (nur) durch den Elastomerkörper in Richtung der Wand gespannt ist. Beim Verspannen des Elastomerkörpers wird die räumliche Anordnung seiner einen Seite relativ zu der Wand festgelegt, und die gegenüberliegende Seite des Elastomerkörpers wird dann von der Spannplatte entlang der Leitungsrichtung zu der Wand hin gezogen, der Elastomerkörper also in Leitungsrichtung komprimiert. Auf die auf dem Elastomerkörper gehaltene Spannhülse wirkt also neben der Kraftkomponente quer zur Leitungsrichtung auch eine Komponente entlang der Leitungsrichtung als Folge der Kompression des Elastomerkörpers; die Spannhülse wird somit durch den Elastomerkörper in Richtung der Wand verspannt, ohne dass es dazu weiterer Vorkehrungen bedarf. Die Spannhülse kann dabei dann direkt an der Wand anliegen oder auch einen weiteren, zusätzlichen Elastomerkörper gegen die Wand verspannen; beispielsweise kann somit ein zusätzlicher Dichtungsring zwischen der Spannhülse und der Wand komprimiert werden.

Bei einer weiteren Ausführungsform der Leitungsdurchführung ist vorgesehen, dass die Spannhülse in montiertem Zustand vollständig außerhalb der Wandöffnung liegt. Die Spannhülse und dieser entsprechend der Elastomerkörper sind also derart konstruiert, dass die Spannhülse nicht in die Wandöffnung hineinragt; die Spannhülse liegt also insbesondere auch nicht an der Laibung der Wandöffnung an.

In weiterer Ausgestaltung der Leitungsdurchführung sind zusätzlich zu den Spannbolzen keine weiteren Verschraubungen der Leitungsdurchführung an der Wand vorgesehen. Es sind allein die Spannbolzen, welche die Spannplatte gegen den Elastomerkörpers verspannen und die Leitungsdurchführung somit in bzw. an der Wand halten. Die Spannbolzen können dabei einerseits Durchgangslöcher in der Wand durchsetzen und den Elastomerkörper gegen die Wand verspannen, andererseits kann die Leitungsdurchführung jedoch auch allein durch die Wechselwirkung des Elastomerkörpers mit der Wand bzw. der Laibung der Wandöffnung befestigt sein.

Eine weitere Ausführungsform der Leitungsdurchführung sieht bei Ausführungen mit mehreren Elastomerkörpern vor, dass in Richtung quer zur Leitung alle Elastomerkörper aneinander anliegen. So kann ein mit beliebiger Schnittführung geteilter und in diesem Sinn eine Mehrzahl bildender Elastomerkörper zum Abdichten der Leitung vorgesehen sein, da jeder Elastomerkörper(teil) zumindest einen weiteren Elastomerkörper direkt berührt. Es soll jedoch in Richtung quer zur Leitung kein weiterer Elastomerkörper vorliegen, welcher keinen dieser Elastomerkörper berührt, von den die Leitung umfassenden Elastomerkörpern also geometrisch getrennt ist. Bei dieser Ausführungsform soll also insbesondere keine Zwischenwand zur Trennung von Elastomerkörpem in Richtung quer zur Leitungsrichtung vorliegen; eine solche Zwischenwand wäre beispielsweise bei einem Einsatzstück für die Wandöffnung gegeben, dessen Außenfläche mit einem gesonderten Elastomerkörper gegen die Wand abgedichtet ist. Es sollen also insbesondere räumlich getrennt keinen gesonderten Elastomerkörper nach Art von Dichtungsringen, Flachdichtungen oder auch Dichtungsbändem vorlieben.

In weiterer Ausgestaltung der Leitungsdurchführung ist in Bezug auf Positionen entlang der Leitungsrichtung genau ein zusammenhängender Elastomerkörper vorgesehen. Es ist also ein Elastomerkörper vorgesehen, durch den zwar (ungefähr leitungsparallele) Schnitte verlaufen können, bei welchem jedoch die einzelnen Bestandteile aneinander anliegen, also insbesondere entlang der Leitungsrichtung nicht durch eine Zwischenwand getrennt sind. Dies schließt beispielsweise durch die Spannplatte vom Elastomerkörper räumlich getrennte Dichtungsringe aus, welche die Spannbolzen gegen die Spannplatte abdichten.

Bei einer weiteren Ausgestaltung der Leitungsdurchführung ist auf einer Seite der Wand kein Elastomerkörper vorgesehen. Der Elastomerkörper, welcher mit der Spannplatte und den Spannbolzen verspannt wird, sitzt entweder in der Öffnung der Wand und ragt zu einer Seite der Öffnung hinaus, oder der Elastomerkörper sitzt nicht in der Öffnung der Wand, sondern liegt an einer Wandfläche an; in beiden Fällen liegt an einer Seite der Wand kein Elastomerkörper vor. Bevorzugt sind dann auch auf der Seite der Wand, auf welcher der Elastomerkörper nicht vorliegt, keine weiteren Elastomerkörper wie beispielsweise Dichtungsringe zum zusätzlichen Abdichten der Leitungsdurchführung vorgesehen.

Bei einer weiteren Ausführungsform der Leitungsdurchführung sind bei dem Elastomerkörper in seinem in Bezug auf Richtungen quer zur Leitung inneren Bereich ablösbare Schichten ("Zwiebelschalen" oder "-ringe") zur Anpassung an ein Querschnittsformat der Leitung vorgesehen. Diese Schichten können also in Anpassung an den Durchmesser der durchzuführenden Leitung entfernt werden, sodass die Leitungsdurchführung zu einer Vielzahl unterschiedlicher Leitungen kompatibel ist und dennoch eine gute Dichtigkeit gewährleistet. Die Schichten können dabei über punktuelle Materialbrücken verbunden sein oder auch über Stege, die etwa an einem entlang der Leitungsrichtung gelegenen Ende des Elastomerkörpers angeordnet sind; für eine detailliertere Beschreibung hierzu wird auf die Anmeldung EP 1 843 071 verwiesen. Ferner kann auch vorgesehen sein, dass die Schichten über umlaufende Nuten und diesen entsprechende Federn aneinander hängen, also ineinander verkeilt sind; wie bei allen anderen Ausführungsformen kann dabei zusätzlich im inneren Bereich des Elastomerkörpers ein Blindstopfen angeordnet sein. Die Leitungsdurchführung kann also auch mit Blindstopfen montiert werden, sodass ein nachträgliches Entfernen des Stopfens und Durchführen der Leitung möglich ist.

In weiterer Ausgestaltung der Leitungsdurchführung ist vorgesehen, dass die Spannhülse an mindestens einer Stelle entlang der Leitungsrichtung aufgetrennt werden kann. Die Spannhülse kann dabei so gestaltet sein, dass an der Seite, die dem Trennschlitz quer zur Leitungsrichtung gegenüberliegt, ein Scharnier in der Spannhülse vorgesehen ist, die Spannhülse also aufgeklappt und nachträglich auf eine bereits verlegte Leitung gesetzt werden kann. Es ist jedoch auch möglich, dass zwei oder mehrere Trennschlitze durch die Spannhülse entlang der Leitungsrichtung verlaufen, sodass die Spannhülse in Einzelteile zerlegt werden kann und diese Einzelteile dann auf eine bereits verlegte Leitung montiert werden.

Bei einer weiteren Ausführungsform der Leitungsdurchführung sind der Elastomerkörper, die Spannhülse und die Spannplatte in solcher Weise geteilt, dass sie um eine die Öffnung in der Wand bereits durchsetzende Leitung herum montiert werden können. Der Elastomerkörper kann dabei in Einzelteile zerlegbar oder auch als Ganzes aufklappbar gestaltet sein, sodass der Elastomerkörper ebenso wie die Spannhülse auf eine bereits verlegte Leitung gesetzt werden kann. Die Spannplatte wird dann nachträglich an den Elastomerkörper angesetzt und mit Bolzen oder Schrauben gegen diesen verpresst. Es ist jedoch auch möglich, dass die Leitungsdurchführung als Ganzes aufklappbar ist, d.h. die Trennschlitze im Elastomerkörper und in der Spannhülse im Wesentlichen deckungsgleich verlaufen und diesen entsprechend Trennschlitze in der Spannplatte vorgesehen sind; für eine detaillierte Beschreibung hierzu wird auf die Anmeldung DE 38 28 693 verwiesen.

Die Erfindung bezieht sich insbesondere auch auf eine Verwendung, bei welcher für die Montage der Leitungsdurchführung nur oder bevorzugt eine Seite der Wand direkt zugänglich ist und die andere Seite der Wand nur oder jedenfalls leichter indirekt über die Wandöffnung. Dabei kann der Elastomerkörper samt Klemmkörper und Spannhülse von der zugänglichen Seite der Wand aus durch die Wandöffnung geschoben werden, sodass die Spannhülse dann auf der nicht zugänglichen Seite der Wand angeordnet ist; das Anziehen der Spannbolzen erfolgt dann wiederum allein von der zugänglichen Seite der Wand aus.

Bevorzugt wird die erfindungsgemäße Leitungsdurchführung verwendet zum Abdichten dünner Wände von Maschinen und/oder technischen Geräten und/oder technischen Anlagen und/oder Gebäuden und/oder Fahrzeugen gegen Feuchtigkeit und/oder Gase. Eine dünne Wand im Sinne der Erfindung ist in dieser Reihenfolge zunehmend bevorzugt eine Wand mit einer Stärke von höchstens 20 mm, 10 mm, 5 mm, 2 mm, 1,5 mm oder 1 mm, und dabei kann die Wand aus etwa Polymermaterialien, Metall, Stein oder auch Plattenmaterial wie Gipskarton oder einem Faserverbundwerkstoff bestehen. Die Leitung ist vorzugsweise eine Strom-, Gas-, Wasser, Wärme-. Telekommunikations- oder anderweitige Signal- oder Datenleitung. Die Leitung kann starr oder flexibel sein.

Im Folgenden wird die Erfindung anhand von Ausführungsbeispielen näher erläutert, wobei die einzelnen Merkmale auch in anderen Kombinationen erfindungswesentlich sein können und sich implizit auf alle Kategorien der Erfindung beziehen.
- Fig. 1: zeigt eine Leitungsdurchführung mit zwei Spannplatten,
- Fig. 2: zeigt zur Illustration des technischen Hintergrunds eine Leitungsdurch- führung, auf die sich die Erfindung nicht bezieht,
- Fig. 3: zeigt eine Leitungsdurchführung mit zwei Spannplatten und einer Spannhülse mit Flansch.

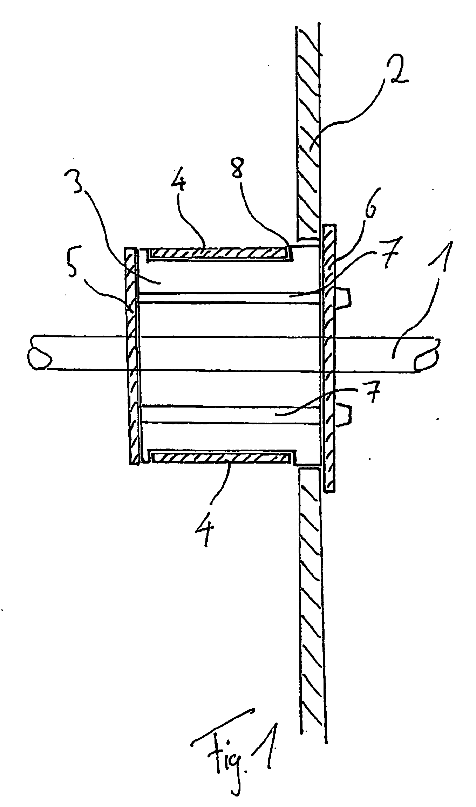

Fig. 1 zeigt eine erfindungsgemäße Leitungsdurchführung zum abgedichteten Durchführen einer Leitung 1 durch eine Wand 2 eines Gerätegehäuses mit einer Stärke von 0,8 mm. Die Leitungsdurchführung besteht aus einem Elastomerkörper 3, einer Spannhülse 4 und einer Spannplatte 5, zu welcher komplementär an der in Leitungsrichtung gegenüberliegenden Seite des Elastomerkörpers 3 eine zweite Spannplatte 6 angeordnet ist; die beiden Spannplatten 5/6 können mittels Spannbolzen 7, die den Elastomerkörper 3 durchsetzen, gegeneinander verspannt werden. Der Elastomerkörper 3 wird dadurch in Leitungsrichtung komprimiert, was gleichzeitig seine Ausdehnung quer zur Leitungsrichtung bewirkt. Diese Ausdehnung quer zur Leitungsrichtung hat einerseits zur Folge, dass der Elastomerkörper 3 dichtend gegen die Leitung 1 verpresst wird, und andererseits bildet sich auch eine dichtende Anlage zwischen dem Elastomerkörper 3 und der Laibung der Wandöffnung aus.

Die Spannhülse 4 begrenzt dabei im außerhalb der Wandöffnung liegenden Bereich die Ausdehnung des Elastomerkörpers 3 quer zur Leitungsrichtung, sodass dieser über die gesamte Länge in Leitungsrichtung fest an die Leitung 1 gepresst wird und eine gute Dichtwirkung zur Leitung 1 resultiert. Da in Richtung quer zur Leitungsrichtung die Expansion des Elastomerkörpers 3 nur in direkter Umgebung zu der Wandöffnung nicht beschränkt ist, wird der Elastomerkörper 3 mit hohem Druck an die Laibung der Wandöffnung gepresst, sodass selbst bei dünnen Wänden 2 eine gute Dichtigkeit ohne den Einsatz zusätzlicher Dichtkörper zwischen beispielsweise der Wand und der an der Wand anliegenden Spannplatte erzielt wird. Durch die Spannhülse 4 wird die Druckverteilung in dem Elastomerkörper 3 gleichermaßen zur Dichtung gegen Laibung der Wand und Leitung 1 optimiert.

Dabei ist die Leitungsdurchführung so gestaltet, dass auch eine Montage auf eine vorverlegt Leitung 1, welche nur von einer Seite der Wandöffnung zugänglich ist, möglich ist. Dazu verläuft durch den Elastomerkörper 3 entlang der Leitungsrichtung ein Schnitt, sodass der Elastomerkörper 3 aufgeklappt und auf die Leitung gesetzt werden kann; da die Spannplatten diesem Schnitt entsprechend geteilt sind, ist hierfür keine Demontage der Spannplatten 5/6 und Spannbolzen 7 notwendig. Auch die Spannhülse kann diesem Schnitt entsprechend entlang der Leitungsrichtung aufgetrennt und wieder verschlossen werden, wobei an der Spannhülse zusätzlich ein Scharnier entlang der Leitungsrichtung vorgesehen ist, sodass die Leitungsdurchführung als Ganzes aufgeklappt und auf die Leitung 1 gesetzt werden kann. In der Außenfläche des Elastomerkörpers 3 ist ferner eine Ausnehmung 8 entlang des Umfanges quer zur Leiterbahn vorgesehen, welche der Aufnahme der Spannhülse 4 dient. Diese wird dadurch einerseits in Position gehalten, wenn der Elastomerkörper 3 nicht verspannt ist, und andererseits überragt die Spannhülse 4 den Elastomerkörper 3 somit nicht in Richtung quer zur Leitungsrichtung, sodass der Elastomerkörper 3 samt aufgesetzter Spannhülse 4 durch die Wandöffnung geschoben werden kann. Durch Anziehen der Spannbolzen 7 wird dann der Elastomerkörper 3 zwischen den beiden Spannplatten 5/6 und der Spannhülse 4 verspannt und gegen die Leitung 1 und die Laibung der Wandöffnung verpresst.

Für den Fall, dass keine nachträgliche Montage auf eine bereits verlegte Leitung 1 notwendig ist, kann die Spannhülse 4 auch als schlichter hohlzylindrischer Körper gestaltet sein, dessen Innendurchmesser in etwa dem Außendurchmesser des Elastomerkörpers entspricht. Bei der Montage kann die Leitung 1 dann durch den Elastomerkörper 3 gezogen werden, wobei Spannhülse 4 und Spannplatte 5 bereits auf bzw. an dem Elastomerkörper 3 sitzen. Es ist jedoch auch möglich, dass die Leitung 1 auf der einen Seite der Wand 2 durch die Spannhülse 4 geführt ist und auf der anderen Seite der Wand 2 durch den Elastomerkörper 3, wobei die Spannhülse 4 erst dann auf den Elastomerkörper 3 geschoben wird, wenn dieser in der Wandöffnung sitzt.

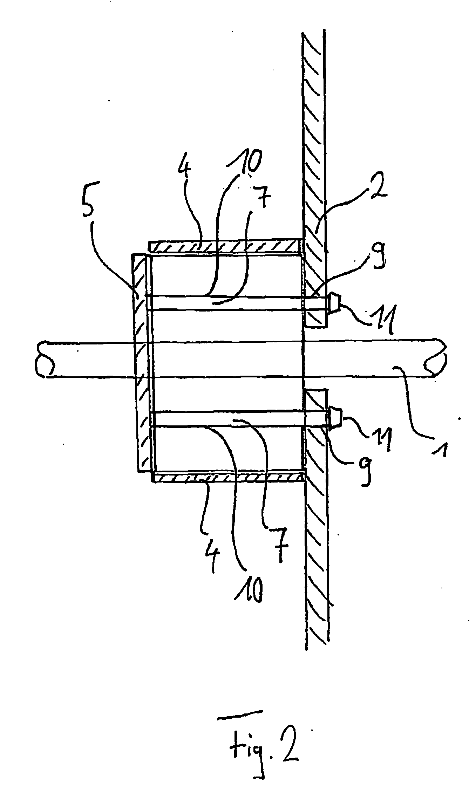

Sofern bei der in Fig. 2 dargestellten Leitungsdurchführung identische Bezugsziffern wie in Fig. 1 verwendet werden, sind damit gleiche oder äquivalente Bauteile oder Bestandteile der Leitungsdurchführung gemäß Fig. 1 bezeichnet.

Fig. 2 zeigt eine Leitungsdurchführung, auf die sich die Erfindung nicht erstreckt, die jedoch das technische Gebiet illustrieren soll. Die Leitungsdurchführung weist einen Elastomerkörper 3, eine Spannhülse 4 und eine Spannplatte 5 auf, allerdings im Gegensatz zu der in Fig. 1 dargestellten Leitungsdurchführung keine zur ersten Spannplatte 5 an der in Leitungsrichtung gegenüberliegenden Seite des Elastomerkörpers angeordnete zweite Spannplatte. Stattdessen sind in der Gehäusewand 2 Durchgangslöcher 9 für die Aufnahme der Spannbolzen 7 angebracht, mit denen der Elastomerkörper 3 zwischen Gehäusewand 2, Pressplatte 5 und Spannhülse 4 komprimiert werden kann. Die Spannhülse 4 begrenzt dabei die Ausdehnung des Elastomerkörpers 3 in Richtung quer zur Leitungsrichtung, sodass der Elastomerkörper 3 gut dichtend an der Leitung 1 anliegt. Des Weiteren wird eine Seite des Elastomer körpers 3 großflächig an die Gehäusewand 1 gepresst, was mögliche Kriechwege maximiert und eine gute Dichtigkeit gewährleistet. Da die Spannbolzen 7 bei diesem Ausführungsbeispiel an der Pressplatte 5 angeschweißt sind, dichtet der Elastomerkörper 3 die Durchgangslöcher 10 gegen die Spannplatte 5 ab; die Hutmuttem 11, mit welchen die Spannbolzen 7 verschraubt werden, brauchen nicht durch zusätzliche Dichtkörper gegen die Gehäusewand 2 abgedichtet werden. Die Montage kann auch bei diesem Ausführungsbeispiel auf einer bereits verlegten Leitung 1 erfolgen, wobei zunächst die Durchgangslöcher 9 in die Gehäusewand gebohrt werden, die Leitungsdurchführung dann auf die Leitung 1 gesetzt und an die Wand 2 geführt wird, sodass die Spannbolzen 7 die Durchgangslöcher 9 durchsetzen. Hierzu ist im Elastomerkörper 3 wiederum ein Schnitt in Leitungsrichtung vorgesehen, welchem entsprechend der Klemmkörper 5 geteilt ist, sodass der Elastomerkörper 3 ohne Demontage des Klemmkörpers 5 aufgeklappt und auf die Leitung 1 gesetzt werden kann. Auch die Spannhülse 4 ist wiederum aufklappbar und verschließbar und wird im Anschluss um den Elastomerkörper 3 gelegt.

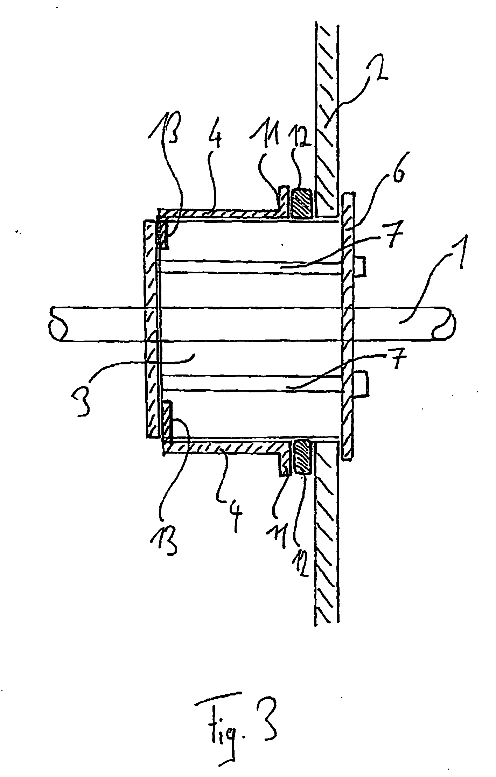

Sofern bei dem in Fig. 3 gezeigten Ausführungsbeispiel der Leitungsdurchführung identische Bezugsziffern wie in den Fig. 1 oder 2 verwendet werden, sind damit gleiche oder äquivalente Bauteile oder Bestandteile bezeichnet.

Bei dem in Fig. 3 gezeigten Ausführungsbeispiel wird der Elastomerkörper 3 wie bei dem in Fig. 1 gezeigten Ausführungsbeispiel in Leitungsrichtung mittels Spannbolzen 7 zwischen zwei Spannplatten 5/6 komprimiert, wobei die Ausdehnung in Richtung quer zur Leitungsrichtung wiederum durch eine Spannhülse 4 begrenzt wird. Die Spannhülse 4 ist hierbei nicht als reiner Hohlzylinder ausgebildet sondern weist einen abgewinkelten Flansch 11 auf, welcher im 90°-Winkel zur Spannhülse 4 und somit quer zur Leitungsrichtung orientiert ist. Neben dem Elastomerkörper 3 ist bei diesem Ausführungsbeispiel als weiterer Elastomerkörper, eine Flachdichtung 12 vorgesehen, welche um den Elastomerkörper 3 umlaufend angeordnet ist. Wird der Elastomerkörper 3 zwischen den beiden Pressplatten 5/6 entlang der Leitungsrichtung komprimiert, so wird die Spannhülse 4 entlang der Leitungsrichtung gegen die Wand verspannt, wodurch die zusätzliche Flachdichtung 12 zwischen dem abgewinkelten Flansch 11 der Spannhülse 4 und der Wand 2 komprimiert wird. Dabei ist die Spannhülse 4 an dem zum Flansch 11 distalen Ende in Richtung zur Leitung 1 hin abgewinkelt, sodass ein zweiter Flansch 13 entsteht, die Spannplatte 5 bei diesem Ausführungsbeispiel also direkt auf die Spannhülse 4 wirkt und diese zur Wand verpresst. Mit dieser Ausgestaltung der Leitungsdurchführung kann auch eine sehr dünne Wand 2, deren Dicke nur 0,5 mm betragen kann, zuverlässig abgedichtet werden. Ferner kann damit auch eine Wandöffnung abgedichtet werden, deren Durchmesser den des Elastomerkörpers 3 teilweise übersteigt, was insbesondere bei einer ungleichmäßig gefassten Wandöffnung von Bedeutung sein kann. Ferner ist auch die Montage der Durchführung auf einer vorverlegten Leitung 1 möglich, da der Elastomerkörper 3 und diesem entsprechend auch die Spannhülse aufklappbar gestaltet ist, wobei auch der Klemmkörper 5 entsprechend geteilt ist, sodass die Leitungsdurchführung als Ganzes aufgeklappt und auf die Leitung gesetzt werden kann. Falls an der Spannhülse 4 kein zweiter Flansch 13 vorgesehen ist, kann die Montage auch nur von einer Seite der Wand aus erfolgen. Hierzu verfügt die Spannhülse 4 über einen Klapomechanismus, kann also an einer Stelle entlang der Leitungsrichtung aufgetrennt werden und ist dabei an anderer Stelle entlang der Leitungsrichtung um ein Scharnier beweglich, sodass die Spannhülse 4 von der Leitungsdurchführung abgenommen und aufgeklappt werden kann. Die derart aufgeklappte Spannhülse 4 wird dann von der zugänglichen Seite der Wand 2 aus durch die Wandöffnung geführt und um die Leitung 1 herum geschlossen. Anschließend wird die Spannhülse 4 an der nur über die Wandöffnung zugänglichen Seite der Wand 2 passend zu der Wandöffnung punktuell fixiert, wobei das zusätzliche Dichtelement 12 bereits zwischen dem Flansch 11 und der Wand 2 sitzt. Wird der Elastomerkörper 3 nun samt Spannplatte 5 und Spannbolzen 7 durch die Wandöffnung in die Spannhülse 4 geschoben, bleibt diese dabei in Position. Das Anziehen der Spannbolzen 7 verspannt den Elastomerkörper 3 dann gegen die Spannhülse 4, diese somit gegen die Wand und deren Flansch 11 gegen das zusätzliche Dichtelement 12.

## Patentansprüche

1. Leitungsdurchführung zum abgedichteten Durchführen einer Leitung (1) durch eine Wand (2) mit
einem Elastomerkörper (3) zum Abdichten,
einer Spannhülse (4) zum Umfassen des Elastomerkörpers (3),
einer Spannplatte (5) zum Spannen des Elastomerkörpers (3) zusammenwirkend mit der Spannhülse (4) und
Spannbolzen (7) zum Durchsetzen des Elastomerkörpers (3) und der Wand (2) und Spannen des Elastomerkörpers (3) zusammenwirkend mit der Spannplatte (5) und der Spannhülse (4),
wobei die Spannhülse (4) dazu ausgelegt ist, einen über eine Öffnung für die Leitung (1) in der Wand (2) hinausstehenden Teil des Elastomerkörpers (3) in Bezug auf Richtungen quer zur Leitungsrichtung zu umfassen und durch eine Begrenzung der Ausdehnung des Elastomerkörpers (3) in Richtungen quer zur Leitungsrichtung dessen Kompression zu bewirken, und
der Elastomerkörper (3) dazu ausgelegt ist, die Leitung (1) in Bezug auf Richtungen quer zur Leitungsrichtung abzudichten,
**dadurch gekennzeichnet, dass**
der Elastomerkörper (3) ferner dazu ausgelegt ist, die Wand (2) durch eine Anlage des Elastomerkörpers (3) an der Laibung der Öffnung durch die Wand (2) abzudichten.

2. Leitungsdurchführung nach Anspruch 1, die dazu ausgelegt ist, dass die Spannhülse (4) nur durch den Elastomerkörper (3) fest mit der Wand verbunden ist.

3. Leitungsdurchführung nach Anspruch 1 oder 2, bei der die Spannhülse (4) keine Befestigungsvorrichtung aufweist, insbesondere eine einfache glatte Rohrform hat.

4. Leitungsdurchführung nach einem der vorstehenden Ansprüche, bei der die Spannhülse (4) nur durch den Elastomerkörper (3) in Richtung der Wand (2) gespannt ist.

5. Leitungsdurchführung nach einem der vorstehenden Ansprüche, bei der die Spannhülse (4) in montiertem Zustand vollständig außerhalb der Wandöffnung liegt.

6. Leitungsdurchführung nach einem der vorstehenden Ansprüche, bei der zusätzlich zu den Spannbolzen (7) keine weiteren Verschraubungen der Leitungsdurchführung an der Wand (2) vorgesehen sind.

7. Leitungsdurchführung nach einem der vorstehenden Ansprüche, bei der, sofern mehrere Elastomerkörper (3) vorliegen, in Richtung quer zur Leitung alle Elastomerkörper (3) aneinander anliegen.

8. Leitungsdurchführung nach einem der vorstehenden Ansprüche, bei der genau ein in Bezug auf Positionen entlang der Leitungsrichtung zusammenhängender Elastomerkörper (3) vorgesehen ist.

9. Leitungsdurchführung nach einem der vorstehenden Ansprüche, bei der auf einer Seite der Wand (2) kein Elastomerkörper (3) vorgesehen ist.

10. Leitungsdurchführung nach einem der vorstehenden Ansprüche, bei der der Elastomerkörper (3) in seinem in Bezug auf Richtungen quer zur Leitung (1) inneren Bereich ablösbare Schichten zur Anpassung an ein Querschnittsformat der Leitung (1) aufweist.

11. Leitungsdurchführung nach einem der vorstehenden Ansprüche, bei der die Spannhülse (4) an mindestens einer Stelle entlang der Leitungsrichtung aufgetrennt werden kann.

12. Leitungsdurchführung nach einem der vorstehenden Ansprüche, bei der der Elastomerkörper (3), die Spannhülse (4) und die Spannplatte (5) in solcher
Weise geteilt sind, dass sie um eine die Öffnung in der Wand (2) bereits durchsetzende Leitung herum montiert werden können.

13. Verwendung einer Leitungsdurchführung nach einem der vorstehenden Ansprüche zum Durchführen einer Leitung (1) durch eine Wand (2).

14. Verwendung einer Leitungsdurchführung gemäß Anspruch 12, wobei die Montage von nur einer Seite der Wand (2) aus erfolgt.

15. Verwendung einer Leitungsdurchführung nach einem der Ansprüche 1 bis 12 zum Abdichten dünner Wände (2) von Maschinen und/oder technischen Geräten und/oder technischen Anlagen und/oder Gebäuden und/oder Fahrzeugen gegen Feuchtigkeit und/oder Gase.

## Claims

1. A conduit duct for sealingly leading a conduit (1) through a wall (2), having an elastomer body (3) for sealing,
a squeezing sleeve (4) for embracing said elastomer body (3),
a squeezing plate (5) for tensioning said elastomer body (3) cooperatively with said squeezing sleeve (4) and
tensioning bolts (7) for penetrating said elastomer body (3) and said wall (2) and tensioning said elastomer body (3) cooperatively with said squeezing plate (5) and said squeezing sleeve (4),
wherein said squeezing sleeve (4) is adapted for embracing a part of said elastomer body (3), projecting from an opening for said conduit (1) in said wall (2), with respect to directions transversal to the conduit direction and effecting a compression of said elastomer body (3) by a limitation of its expansion in directions transversal to said conduit direction, and
said elastomer body (3) is adapted for sealing said conduit (1) with respect to directions transversal to said conduit direction,
**characterized in that**
said elastomer body (3) is further adapted for sealing said wall (2) by a contact of said elastomer body (3) to the soffit of said opening through said wall (2).

2. The conduit duct according to claim 1, which is adapted for said squeezing sleeve (4) being firmly coupled to said wall only by said elastomer body (3).

3. The conduit duct according to claim 1 or 2, wherein said squeezing sleeve (4) comprises no fastening device and has in particular a simple smooth tubular shape.

4. The conduit duct according to one of the preceding claims, wherein said squeezing sleeve (4) is only tensioned by said elastomer body (3) in direction to said wall (2).

5. The conduit duct according to one of the preceding claims, wherein said squeezing sleeve (4) is, in the assembled state, completely arranged outside of said wall opening.

6. The conduit duct according to one of the preceding claims, wherein no additional threaded connections of said conduit duct to said wall (2) are provided in addition to said tensioning bolts (7).

7. The conduit duct according to one of the preceding claims, wherein, if several elastomer bodies (3) are provided, all elastomer bodies (3) contact each other in a direction transversal to said conduit.

8. The conduit duct according to one of the preceding claims, wherein exactly one elastomer body (3) coherent with respect to positions along said conduit direction is provided.

9. The conduit duct according to one of the preceding claims, wherein no elastomer body (3) is provided on one side of said wall (2).

10. The conduit duct according to one of the preceding claims, wherein said elastomer body (3) comprises separable layers for an adaption to a cross-section format of said conduit (1) in its, with respect to directions transversal to said conduit (1), inner region.

11. The conduit duct according to one of the preceding claims, wherein said squeezing sleeve (4) can be opened along said conduit direction at at least one location.

12. The conduit duct according to one of the preceding claims, wherein said elastomer body (3), said squeezing sleeve (4) and said squeezing plate (5) are parted in such a manner that they can be assembled around a conduit already penetrating said opening in said wall (2).

13. A use of a conduit duct according to one of the preceding claims for leading a conduit (1) through a wall (2).

14. A use of a conduit duct according to claim 12, wherein the assembly occurs from one side of said wall (2) only.

15. The use of a conduit duct according to one of claims 1 - 12 for sealing thin walls (2) of machines and/or technical devices and/or technical plants and/or buildings and/or vehicles against humidity and/or gases.

## Revendications

1. Passage de ligne pour le passage étanche d'une ligne (1) à travers une paroi (2), avec
un corps élastomère (3) pour l'étanchéité,
une douille de serrage (4) destinée à entourer le corps élastomère (3).
une plaque de serrage (5) pour le serrage du corps élastomère (3), en coopération avec la douille de serrage (4), et
des boulons de serrage (7) destiné à traverser le corps élastomère (3) et la paroi (2) et au serrage du corps élastomère (3), en coopération avec la plaque de serrage (5) et la douille de serrage (4),
dans lequel la douille de serrage (4) est conçue pour entourer une partie du corps élastomère (3) dépassant d'une ouverture pour la ligne (1) dans la paroi (2), par rapport à des directions perpendiculaires au sens de la ligne, et pour provoquer la compression du corps élastomère (3), par une limitation de l'extension du corps élastomère (3) dans des directions perpendiculaires au sens de la ligne, et
le corps élastomère (3) est conçu pour rendre la ligne (1) étanche par rapport à des directions perpendiculaires au sens de la ligne,
**caractérisé en ce que**
le corps élastomère (3) est en outre conçu pour rendre la paroi (2) étanche, par l'application du corps élastomère (3) sur l'intrados de l'ouverture dans la paroi (2).

2. Passage de ligne selon la revendication 1, conçu de manière à ce que la douille de serrage (4) soit reliée fixement à la paroi, uniquement par le biais du corps élastomère (3).

3. Passage de ligne selon la revendication 1 ou 2, dans lequel la douille de serrage (4) ne comporte aucun dispositif de fixation, et présente en particulier une forme de tuyau lisse simple.

4. Passage de ligne selon l'une des revendications précédentes, dans lequel la douille de serrage (4) est serrée en direction de la paroi (2) uniquement par le biais du corps élastomère (3).

5. Passage de ligne selon l'une des revendications précédentes, dans lequel, dans l'état monté, la douille de serrage (4) se trouve entièrement à l'extérieur de l'ouverture dans la paroi.

6. Passage de ligne selon l'une des revendications précédentes, dans lequel aucun autre vissage du passage de ligne dans la paroi (2) n'est prévu en dehors des boulons de serrage (7).

7. Passage de ligne selon l'une des revendications précédentes, dans lequel, en présence de plusieurs corps élastomères (3), tous les corps élastomères (3) se touchent dans la direction perpendiculaire à la ligne.

8. Passage de ligne selon l'une des revendications précédentes, dans lequel il est prévu exactement un corps élastomère (3) associé par rapport à plusieurs endroits dans la longueur du sens de la ligne.

9. Passage de ligne selon l'une des revendications précédentes, dans lequel aucun corps élastomère (3) n'est prévu d'un côté de la paroi (2).

10. Passage de ligne selon l'une des revendications précédentes, dans lequel le corps élastomère (3) comporte des couches amovibles, pour l'adaptation à un format de section transversale de la ligne (1), dans sa région intérieure par rapport à des directions perpendiculaires à la ligne (1).

11. Passage de ligne selon l'une des revendications précédentes, dans lequel la douille de serrage (4) peut être ouverte à au moins un endroit le long du sens de la ligne.

12. Passage de ligne selon l'une des revendications précédentes, dans lequel le corps élastomère (3), la douille de serrage (4) et la plaque de serrage (5) sont répartis de telle manière, qu'ils peuvent être montés autour d'une ligne traversant déjà l'ouverture dans la paroi (2).

13. Utilisation d'un passage de ligne selon l'une des revendications précédentes, pour le passage d'une ligne (1) à travers une paroi (2).

14. Utilisation d'un passage de ligne selon la revendication 12, dans laquelle le montage est effectué seulement par un côté de la paroi (2).

15. Utilisation d'un passage de ligne selon l'une des revendication 1 à 12, pour rendre des parois fines (2) de machines et/ou d'appareils techniques et/ou d'installations techniques et/ou de bâtiments et/ou de véhicules, étanches à l'humidité et/ou aux gaz.
